Europäisches Patentamt

European Patent Office

Office européen des brevets

(11) Veröffentlichungsnummer: **0 014 394**
**B1**

(12) **EUROPÄISCHE PATENTSCHRIFT**

(45) Veröffentlichungstag der Patentschrift: ·
06.04.83

(21) Anmeldenummer: 80100388.0

(22) Anmeldetag: 25.01.80

(51) Int. Cl.³: **C 02 F 3/30**

(54) Verfahren zur Reinigung von Abwasser mit einem hohen Gehalt an Stickstoffverbindungen.

(30) Priorität: 06.02.79 DE 2904335

(43) Veröffentlichungstag der Anmeldung:
20.08.80 Patentblatt 80/17

(45) Bekanntmachung des Hinweises auf die Patenterteilung:
06.04.83 Patentblatt 83/14

(84) Benannte Vertragsstaaten:
BE DE FR GB IT NL

(56) Entgegenhaltungen:
DE-A-2 338 853
DE-A-2 354 383
FR-A-2 382 405
US-A-3 764 523

(73) Patentinhaber: BAYER AG, Zentralbereich Patente,
Marken und Lizenzen, D-5090 Leverkusen 1, Bayerwerk
(DE)

(72) Erfinder: Pascik, Imre, Dipl.-Ing., Wilmersdorfer
Strasse 6, D-4019 Monheim (DE)
Erfinder: Bruch, Werner, Am Burggraben 17,
D-4047 Dormagen 1 (DE)
Erfinder: Diesterweg, Gerhard, Dr., Saarstrasse 2a,
D-5090 Leverkusen 1 (DE)
Erfinder: Mann, Theo, Dr., Blumenstrasse 18,
D-4018 Langenfeld (DE)

## Verfahren zur Reinigung von Abwasser mit einem hohen Gehalt an Stickstoffverbindungen

Die vorliegende Erfindung betrifft ein Verfahren zur kontinuierlichen Reinigung von Abwasser, das einen hohen Gehalt an Stickstoffverbindungen aufweist, mit Hilfe von Mikroorganismen durch Nitrifikation und Denitrifikation, wobei die Nitrifikation in zwei Stufen durchgeführt wird.

Es ist bekannt, Abwasser in mehreren Stufen hintereinander, z.B. einer Oxidationsstufe für Kohlenstoff enthaltende Verbindungen, einer Oxidationsstufe für Stickstoff enthaltende Verbindungen, einer sogenannten Nitrifikationsstufe und anschliessend einer Denitrifikationsstufe zu reinigen, wobei die beiden Oxidationsstufen auch als eine Stufe zusammengefasst sein können. In der Nitrifikationsstufe werden die in dem Abwasser enthaltenen nitrifizierbaren Stickstoffverbindungen zu Nitrit bzw. Nitrat umgesetzt. In der darauffolgenden Denitrifikation wird im Abwasser enthaltenes Nitrit und Nitrat zu molekularem Stickstoff reduziert. Bei stossweise anfallendem Abwasser oder Abwasser mit stark unterschiedlichen Frachtschwankungen sind solche Verfahren nicht elastisch genug, da Stoffe durch die erste Oxidationsstufe, auch Belebungsstufe genannt, in die Nitrifikationsstufe gelangen können, die dort die Nitrifikanten, also die Mikroorganismen, die die Stickstoffverbindungen zu Nitrit bzw. Nitrat oxidieren, abtöten oder zumindest stark inhibieren können. Eine solche Störung in der zweiten Stufe bedeutet jedoch eine sehr lange Ausfallzeit für die gesamte Anlage, da es etwa 5 bis 20 Tage dauert, bis sich eine ausreichende Menge von Nitrifikanten wieder gebildet hat. Es ist bekannt, Abwasser mit niedrigen Gehalten an Stickstoffverbindungen, also überwiegend kommunales Abwasser, mit etwa 10 bis 25 mg N/l (sämtliche Stickstoffverbindungen sind als atomarer Stickstoff berechnet) mikrobiologisch zu reinigen. In der US-Patentschrift 3 617 540 ist es z.B. beschrieben, bei der Abwasserbehandlung der Nitrifikation eine Oxidationsstufe für die kohlenstoffhaltigen Stoffe vorzuschalten.

Aus der DE-B-2 339 557 ist ein Verfahren bekannt, bei dem Stickstoff aus organische und Stickstoff-Verbindungen enthaltendem Abwasser entfernt wird, indem das Abwasser nacheinander durch eine biologische Nitrifikationsstufe sowie eine biologische Denitrifikationsstufe und zum Schluss in eine Feststoffbrennstufe geleitet wird, nachdem es zuerst einer weiteren, der biologischen Nitrifikationsstufe vorgeschalteten biologischen Denitrifikationsstufe zugeführt wurde, in die zudem von der Feststoffabtrennstufe zurückgeführter Aktivschlamm sowie aus der biologischen Nitrifikationsstufe abgeführtes Mischwasser eingeleitet wird.

In der DE-A-2 354 383 ist ein Verfahren zum kontinuierlichen Entfernen von Stickstoffverbindungen aus Abwasser mittels mikrobiologischer Nitrifikation und Denitrifikation beschrieben, wobei das Abwasser der ersten Denitrifikationszone, deren Abfluss einer Nitrifikationszone zufliesst, zugeführt wird. Vom Abfluss der Nitrifikationszone wird ein Teil der ersten Denitrifikationszone zugeführt, der restliche Teil gelangt zu einer Schlammabsetzvorrichtung, deren Schlamm fast restlos in die erste Denitrifikationszone und deren Ablauf in eine zweite Denitrifikationszone eingebracht und dort abermals einer Denitrifikation unterzogen wird.

Aus der DE-A-2 338 853 ist bereits ein Verfahren mit zweistufiger aerober Behandlung bekannt. Jedoch fehlt eine gezielte Steuerung zur Aktivierung des Ammon-Stickstoff-Abbaus. Der Gehalt an N—H-Verbindungen wird demnach in der vorgeschalteten anaeroben Stufe auf unter 100 mg/l reduziert.

Gegenstand der vorliegenden Erfindung ist nun ein Verfahren für die kontinuierliche Reinigung von Abwasser mit einem Gehalt an nitrifizierbaren Stickstoffverbindungen von oberhalb 300 mg N/l durch Nitrifikation und Denitrifikation mit Hilfe von Mikroorganismen, das dadurch gekennzeichnet ist, dass

a) das Abwasser zunächst in eine erste Nitrifikationsstufe eingeführt wird, in der zwischen 50 und 85% der nitrifizierbaren Stickstoffverbindungen abgebaut werden,

b) der Abfluss aus der ersten Nitrifikationsstufe in eine zweite Nitrifikationsstufe eingeführt wird, in der mehr als 75% der restlichen nitrifizierbaren Stickstoffverbindungen abgebaut werden,

c) Schlamm aus der zweiten Nitrifikationsstufe abgetrennt wird und in die erste und zweite Nitrifikationsstufe zurückgeführt wird und Überschussschlamm ausgeschleust wird,

d) das nitrifizierte Abwasser aus der zweiten Nitrifikationsstufe nach Schlammabtrennung in eine Denitrifikationsstufe geführt wird, und

e) hinter der Denitrifikationsstufe abgetrennter Schlamm in die erste Nitrifikationsstufe zurückgeführt wird, wobei

f) mittels der zurückgeführten Schlammteile der Schlammgehalt in den Nitrifikationsstufen zwischen 1 und 10 g/l eingestellt wird und

g) die Schlammbelastung in der ersten Nitrifikationsstufe zwischen 0,12 und 0,35 kg $NH_4^+$/kg TS × Tag und in der zweiten Nitrifikationsstufe zwischen 0,02 und 0,11 kg $NH_4^+$/kg TS × Tag eingestellt wird.

Das erfindungsgemässe Verfahren ist bevorzugt für solches Abwasser geeignet, das mehr als 400 mg N/l, berechnet als atomarer Stickstoff, enthält.

Das Abwasser, das mit dem erfindungsgemässen Verfahren aufgearbeitet werden kann, kann neben nitrifizierbaren Stickstoffverbindungen noch einen mehr oder weniger grossen Anteil an organischen Verbindungen enthalten; ein solches Abwasser wird allgemein auch als mehr oder weniger «BSB-haltiges» Abwasser bezeichnet. Solches Abwasser mit einem geringen BSB-Gehalt wird nach dem erfindungsgemässen Verfahren direkt in die zweistufige Nitrifikation eingeleitet.

Bei Bedarf, also wenn das Abwasser einen höheren BSB-Gehalt – als für beide Nitrifikationsstufen nötig ist – aufweist, wird das Abwasser vor Eintritt in die erste Nitrifikationsstufe in einer Denitrifikationsstufe behandelt. Zur Einstellung der Einlaufkonzentration kann eine teilweise Rückführung des geklärten Abwassers in die Nitrifikation vorteilhaft sein.

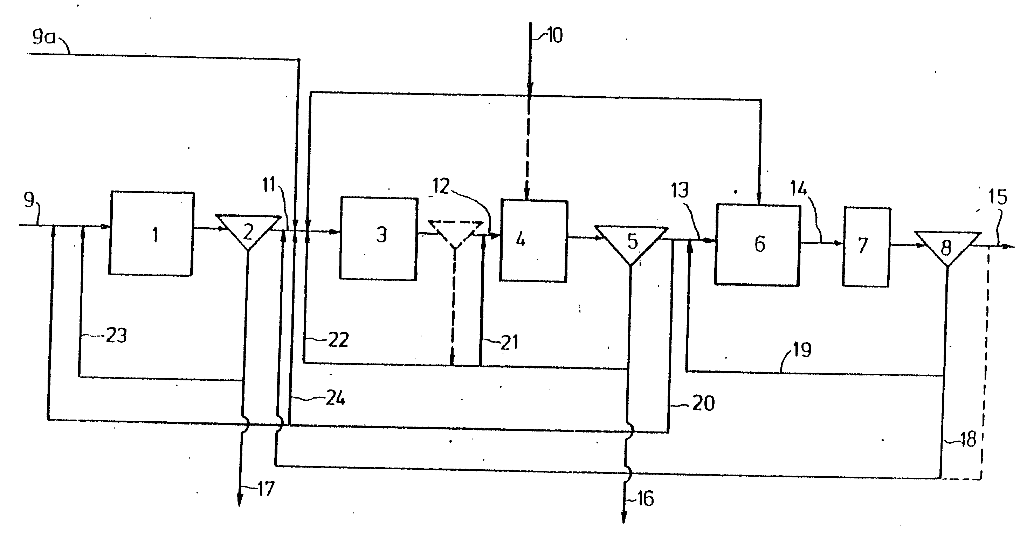

Das erfindungsgemässe Verfahren wird im folgenden anhand der Figur beschrieben.

Das anfallende Abwasser mit einem geringen BSB-Gehalt (9a) wird zunächst einer zweistufigen Nitrifikation (3, 4) zugeführt. Zwischen den beiden Nitrifikationsstufen kann zumindest eine teilweise Zwischenklärung vorgenommen werden, in diesem Fall wird der dort anfallende Schlamm zumindest teilweise wieder der ersten Nitrifikationsstufe zugeführt.

Anschliessend an die zweite Nitrifikationsstufe (4) erfolgt eine Nachklärung (5), der dort anfallende Schlamm wird in die erste (22) und zweite (21) Nitrifikationsstufe zurückgeführt, überschüssiger Schlamm kann hier abgezogen werden (16). Das nitrifizierte Abwasser wird dann in eine Denitrifikationsstufe (6) geleitet und hier gegebenenfalls unter Zusatz (10) von kohlenstoffhaltigen Verbindungen, also z.B. Methanol, Äthanol, höheren Alkoholen oder Gemischen von diesen oder entsprechend zusammengesetztem Abwasser, das dann jedoch keine nitrifizierbaren Bestandteile mehr enthalten soll, behandelt. Bei Bedarf kann dieser Denitrifikationsstufe eine Belebungsstufe (7) mit einer anschliessenden Nachklärung (8) folgen. Aus dieser letzten Nachklärung (8) wird der Schlamm in die erste Nitrifikationsstufe geführt (18), bei Bedarf kann hier überschüssiger Schlamm, ebenso wie bei der zweiten Nachklärungsstufe (5), abgezogen werden. Das aus der letzten Nachklärungsstufe (8) austretende Abwasser kann abgegeben bzw. z.T. vor bzw. in die erste Nitrifikationsstufe zurückgeführt werden.

Die Höchstbelastung des Abwassers an nitrifizierbaren Stickstoffverbindungen ist z.B. auch von der Abwasserbeschaffenheit abhängig. Bei der Behandlung eines Abwassers, das einen zu hohen Gehalt an nitrifizierbaren Stickstoffverbindungen aufweisen sollte, wird dieses z.B. mit Mischwasser über (20) bzw. auch Abwasser über (15) auf den jeweils maximal tolerierbaren oder gewünschten Wert verdünnt.

Bei hoch BSB-haltigem Abwasser wird dies (9) zunächst einer Denitrifikationsstufe (1) mit anschliessender Nachklärung (2) zugeführt und dort vorzugsweise derart behandelt, bis der BSB-Gehalt bis auf den in der zweistufigen Nitrifikation (3, 4) benötigten Gehalt abgesunken ist. Der in der Nachklärung (2) anfallende Schlamm wird über (23) zumindest teilweise der Denitrifikation (1) wieder zugeführt, Überschussschlamm kann abgegeben werden (17).

Bei Bedarf kann Mischwasser aus der Nachklärung (5) über (20) der Denitrifikation bzw. über (24) der ersten Stufe der zweistufigen Nitrifikation (3) zugeführt werden.

Das Verfahren ist sehr flexibel, auch gegenüber stossweise anfallendem Abwasser mit hoher Belastung an stickstoffhaltigen bzw. nitrifizierbaren Verbindungen. Der pH-Wert des Abwassers soll etwa neutral bzw. leicht alkalisch sein, sauer anfallendes Abwasser muss etwa neutral gestellt werden. Die Begasung erfolgt mit Luft und/oder mit an Sauerstoff angereicherter Luft und/oder reinem Sauerstoff.

Die Abbaubedingungen in den beiden Nitrifikationsstufen werden so eingestellt, dass in der ersten Stufe 50 bis 85%, bevorzugt 60 bis 80%, besonders bevorzugt 63 bis 78%, und in der zweiten Stufe mehr als 75, bevorzugt mehr als 80%, besonders bevorzugt 85 bis 95% des restlichen Gehaltes an nitrifizierbaren Stickstoffverbindungen abgebaut werden. Hierfür wird der ersten Stufe eine Raumbelastung von 0,12 bis 3,5, vorzugsweise von 0,17 bis 2,7, besonders bevorzugt von 0,175 bis 2,4 kg $NH_4^+/m^3 \cdot$ Tag und in der zweiten Stufe eine Raumbelastung von 0,02 bis 1,1, bevorzugt von 0,025 bis 0,68 und besonders bevorzugt von 0,03 bis 0,65 kg $NH_4^+/m^3 \cdot$ Tag eingestellt. Der Sauerstoffgehalt beträgt in beiden Stufen 0,3 bis 10, bevorzugt 0,5 bis 8, besonders bevorzugt 0,6 bis 5 mg/l. Der Schlammgehalt beträgt in beiden Stufen 1 bis 10, bevorzugt 1,5 bis 8, besonders bevorzugt 2 bis 7 g/l. In beiden Stufen soll der Schlamm ein Alter von mindestens 5 Tagen, vorzugsweise von mindestens 7 Tagen, besitzen.

Bei dem erfindungsgemässen Verfahren wurde überraschend festgestellt, dass es wichtig ist, die zweistufige Nitrifikation bei einer ganz bestimmten Schlammbelastung – bezogen auf die $NH_4^+$-Belastung – durchzuführen.

Das erfindungsgemässe Verfahren wird mit einer Schlammbelastung von 0,35 bis 0,12 kg $NH_4^+/$kg TS·Tag, bevorzugt mit einer Schlammbelastung von 0,25 bis 0,13 kg $NH_4^+/$kg TS·Tag, besonders bevorzugt von 0,20 bis 0,14 kg $NH_4^+/$kg TS·Tag in der ersten Stufe und von 0,02 bis 0,11 kg $NH_4^+/$kg TS·Tag, bevorzugt von 0,03 bis 0,10 kg $NH_4^+/$kg TS·Tag, besonders bevorzugt von 0,04 bis 0,08 kg $NH_4^+/$kg TS·Tag in der zweiten Stufe durchgeführt. TS bedeutet Trockensubstanz des Schlammes.

Das vorliegende Verfahren gestattet es, Abwasser zu über 90% von seinen nitrifizierbaren und denitrifizierbaren Bestandteilen zu reinigen.

Das erfindungsgemässe Verfahren soll anhand der folgenden Beispiele und der Figur noch näher erläutert werden.

Beispiel 1
(Abwasser mit hohem BSB-Gehalt)
Ein Abwasserstrom (9) mit
$BSB_5$ = 873 mg/l und
$NH_4^+$ = 1365 mg/l
wurde vor der Denitrifikationsstufe (1) mit dem zurückgeführten Teilstrom (20) des nitrifizierten Abwassers vermengt. Das Abwasser/Biomasse-Gemisch wurde im Nachklärer (2) abgetrennt, die Biomasse wurde als Rücklaufschlamm (23) zurückgeführt, oder als Überschussschlamm aus dem System entfernt (17).

Nach 8stündiger Denitrifikation wurde das Wasser (11), das 650 mg/l $NH_4^+$ und 210 mg/l $BSB_5$ enthielt, in die erste (3) und über (12) anschliessend in die zweite Nitrifikationsstufe (4) gefördert. Die $NH_4^+$-Konzentration im Auslauf der ersten Nitrifikationsstufe betrug 163 mg/l.

Bei einem plötzlich eintretenden Unterangebot an organischem Kohlenstoff kann das System damit über die Leitung (10) versorgt werden.

Die hydraulischen Verweilzeiten in den Nitrifikationsstufen betrugen 18 Stunden (in 3) bzw. 16,7 Stunden (4).

Das aus dem Nachklärer (5) ablaufende Wasser enthielt

$NH_4^+$ = 19 mg/l
$NO_2^-$ = 1013 mg/l
$NO_3^-$ = 390 mg/l
$BSB_5$ = 18 mg/l

Ein Teil dieses Wassers wurde nach (1) zurückgeführt, der Rest (13) wird in der Denitrifikationsstufe (6) unter Zusatz geeigneter Wasserstoffdonatoren (10) reduziert. Bei einem Überangebot an organischem Kohlenstoff können diese über Leitung (14) in die nachgeschaltete Belebungsstufe (7) gefördert und oxidiert werden. Dazu kann die Biomasse aus (6) verwendet werden, deren Rückführung aus dem Nachklärer (8) über die Leitung (19) erfolgt. Der Überschussschlamm der zweiten Denitrifikationsstufe (6) wurde gegebenenfalls nach einer weiteren Belebungsstufe (7) über (18) den Stufen (3) und (4) zwecks Mineralisierung zugeführt, ein Teil davon als Überschussschlamm (16) abgezogen, der grösste Teil jedoch als Rücklaufschlamm (21) bzw. (22) verwendet. Das ablaufende Abwasser (15) enthielt noch folgende Komponenten:

$NH_4^+$ = 7 mg/l
$NO_2^-$ = 0,1 mg/l
$NO_3^-$ = 15 mg/l
$BSB_5$ = 10 mg/l

Bei einem hohen $NH_4^+$-Angebot kann dieses Wasser (15) zwecks Verdünnung des einfliessenden Wassers in die Nitrifikation (3) gefördert werden.

Beispiel 2
(Abwasser mit geringem BSB-Gehalt)
Ein Abwasserstrom (9a) mit
$BSB_5$ = 236 mg/l und
$NH_4^+$ = 595 mg/l
wurde direkt in die erste Nitrifikationsstufe (3) mit einer hydraulischen Verweilzeit von 19 Stunden eingeleitet. Eine filtrierte Probe dieses Ablaufes besass einen Gehalt von 152 mg/l $NH_4^+$.

Die 24stündige Behandlung in der zweiten Nitrifikationsstufe (4) ergab einen Ablauf mit

$NH_4^+$ = 8 mg/l
$NO_2^-$ = 926 mg/l
$NO_3^-$ = 535 mg/l
$BSB_5$ = 12 mg/l

Die Gesamtmenge dieses Wassers wurde nun über Leitung (13) in die Denitrifikationsstufe (6) geleitet und unter Zusatz der Wasserstoffdonatoren aus Leitung (10) denitrifiziert.

Die Biomasse aus der Nachklärung (8) wurde über die Leitung (18) vor die Nitrifikation (3) zurückgeführt.

Bei zu hohen $NH_4^+$-Konzentrationen kann ein Teilstrom des geklärten Ablaufes (15) zur Verdünnung verwendet werden.

Die Denitrifikationsstufe (1) ist bei der Zusammensetzung des zu behandelnden Abwassers nicht unbedingt nötig.

**Patentansprüche**

1. Verfahren für die kontinuierliche Reinigung von Abwasser mit einem Gehalt an nitrifizierbaren Stickstoffverbindungen von oberhalb 300 mg N/l durch Nitrifikation und Denitrifikation mit Hilfe von Mikroorganismen, dadurch gekennzeichnet, dass

a) das Abwasser zunächst in eine erste Nitrifikationsstufe eingeführt wird, in der zwischen 50 und 85% der nitrifizierbaren Stickstoffverbindungen abgebaut werden,

b) der Abfluss aus der ersten Nitrifikationsstufe in eine zweite Nitrifikationsstufe eingeführt wird, in der mehr als 75% der restlichen nitrifizierbaren Stickstoffverbindungen abgebaut werden,

c) Schlamm aus der zweiten Nitrifikationsstufe abgetrennt wird und in die erste und zweite Nitrifikationsstufe zurückgeführt wird und Überschussschlamm ausgeschleust wird,

d) das nitrifizierte Abwasser aus der zweiten Nitrifikationsstufe nach Schlammabtrennung in eine Denitrifikationsstufe geführt wird, und

e) hinter der Denitrifikationsstufe abgetrennter Schlamm in die erste Nitrifikationsstufe zurückgeführt wird, wobei

f) mittels der zurückgeführten Schlammanteile der Schlammgehalt in den Nitrifikationsstufen zwischen 1 und 10 g/l eingestellt wird und

g) die Schlammbelastung in der ersten Nitrifikationsstufe zwischen 0,12 und 0,35 kg $NH_4^+$/kg TS (Trockensubstanz) × Tag und in der zweiten Nitrifikationsstufe zwischen 0,02 und 0,11 kg $NH_4^+$/kg TS × Tag eingestellt wird.

2. Verfahren nach Anspruch 1, dadurch gekennzeichnet, dass zwischen der ersten und der zweiten Nitrifikationsstufe eine Zwischenklärung erfolgt.

3. Verfahren nach einem der Ansprüche 1 oder 2, dadurch gekennzeichnet, dass das Schlammalter in beiden Nitrifikationsstufen mindestens 5 Tage, vorzugsweise mindestens 7 Tage, beträgt.

**Claims**

1. Process for the continuous purification of effluent with a content of nitrifiable nitrogen compounds of more than 300 mg N/l by nitrification and denitrification with the aid of microorganisms, characterised in that

a) the effluent is first introduced into a first nitrification stage in which between 50 and 85% of the nitrifiable nitrogen compounds are degraded,

b) the effluent from the first nitrification stage is introduced into a second nitrification stage in which more than 75% of the remaining nitrifiable nitrogen compounds are degraded,

c) sludge from the second nitrification stage is separated off and reintroduced into the first and second nitrification stages and excess sludge is discharged,

d) the nitrified effluent from the second nitrification stage is passed, after the removal of sludge, into a denitrification stage, and

e) sludge separated off downstream of the denitrification stage is returned to the first nitrification stage,

f) the sludge content in the nitrification stages being adjusted to between 1 and 10 g/l by means of the returned portions of sludge and

g) the sludge content in the first nitrification stage is adjusted to between 0.12 and 0.35 kg $NH_4^+$/kg SM (solid matter) × day and in the second nitrification stage to between 0,02 and 0.11 kg $NH_4^+$/kg SM × day.

2. Process according to claim 1, characterised in that intermediate clarification is carried out between the first and the second nitrification stages.

3. Process according to one of claims 1 or 2, characterised in that the age of the sludge is in both nitrification stages at least 5 days, preferably at least 7 days.

**Revendications**

1. Procédé de purification en continu d'eaux résiduaires ayant une teneur en composés azotés nitrifiables de plus de 300 mg de N/l par nitrification et dénitrification à l'aide de microorganismes, caractérisé en ce que:

a) on introduit tout d'abord les eaux résiduaires dans un premier étage de nitrification dans lequel entre 50 et 85% des composés azotés nitrifiables sont décomposés,

b) on introduit la décharge du premier étage de nitrification dans un deuxième étage de nitrification dans lequel plus de 75% des composés azotés nitrifiables résiduels sont décomposés,

c) on sépare la boue du deuxième étage de nitrification et on la recycle dans le premier et le deuxième étage de nitrification, tandis que l'on écluse la boue en excès au dehors,

d) après séparation de la boue, on fait passer les eaux résiduaires nitrifiées du deuxième étage de nitrification dans un étage de dénitrification, et

e) on recycle, dans le premier étage de nitrification, la boue séparée derrière l'étage de dénitrification,

f) la teneur totale en boue dans les étages de nitrification étant réglée entre 1 et 10 g/l au moyen de la fraction de boue recyclée, et

g) la charge de la boue étant réglée entre 0,12 et 0,35 kg $NH_4^+$/kg de substance sèche × jour dans le premier étage de nitrification, tandis qu'elle est réglée entre 0,02 et 0,11 kg $NH_4^+$/kg de substance sèche × jour dans le deuxième étage de nitrification.

2. Procédé suivant la revendication 1, caractérisé en ce que, entre le premier et le deuxième étage de nitrification, on procède à une clarification intermédiaire.

3. Procédé suivant une des revendications 1 et 2, caractérisé en ce que l'âge de la boue dans les deux étages de nitrification est d'au moins 5 jours, de préférence, d'au moins 7 jours.